Europäisches Patentamt

European Patent Office

Office européen des brevets

⑱

(11) Publication number: **0 210 305**
**B1**

(12) **EUROPEAN PATENT SPECIFICATION**

(45) Date of publication of patent specification: **22.03.89**

(21) Application number: **85303927.9**

(22) Date of filing: **04.06.85**

(51) Int. Cl.⁴: **F 16 B 12/32,** F 16 B 7/04, F 16 B 21/16

(54) **Connecting arrangement.**

(43) Date of publication of application:
**04.02.87 Bulletin 87/06**

(45) Publication of the grant of the patent:
**22.03.89 Bulletin 89/12**

(84) Designated Contracting States:
**CH DE FR IT LI NL SE**

(56) References cited:
**CA-A-1 130 359**
**CH-A- 403 207**
**CH-A- 632 064**
**DE-A-2 013 450**
**DE-U-6 900 001**
**DE-U-7 440 033**
**FR-A-1 304 766**
**FR-A-1 331 299**

(73) Proprietor: **Wright, Brian Laurence**
**338 Bideford Green**
**Linslade Bedfordshire LU7 7TX (GB)**

(72) Inventor: **Wright, Brian Laurence**
**338 Bideford Green**
**Linslade Bedfordshire LU7 7TX (GB)**

Courier Press, Leamington Spa, England.

## Description

This invention relates to connecting arrangements for inter-connecting rods.

An arrangement for interconnecting rods is known from FR—A—1 304 766. Its construction and the use of it are rather complex.

It comprises 3 main components, i.e. connecting rods, connecting members and coupling members.

According to the invention a connecting arrangement comprises at least one connecting rod having at one or each end a connecting stud, the stud having a head portion at its free end and an adjacent neck portion which leads into the head portion through an inclined shoulder, and a spherical or part-spherical connecting member having one or a plurality of bores disposed on the surface of the connecting member and extending into the spherical member from its surface for receiving the connecting stud at the end of the connecting rod and one or a plurality of threaded bores each of which intersects a respective one of the stud receiving bores and locates a grub screw, the arrangement being such that as a said grub screw is screwed into its bore it engages said shoulder on the stud to draw said stud into said bore.

Various connecting arrangements in accordance with the invention will now be described by way of example with reference to the accompanying drawings, in which:—

Figure 1 is a plan view of a connecting member of a first arrangement,

Figure 2 is a section through the connecting member

Figure 3 is a view partly in section of a connecting rod of the first arrangement, and

Figure 4 is a view of the connecting member and connecting rod assembled together to form the connecting arrangement,

Figure 5 is a view of a second connecting arrangement,

Figure 6 is a view of a third connecting arrangement,

Figure 7 is a view of a fourth connecting arrangement,

Figure 8 is a view of a fifth connecting arrangement,

Figure 9 is a view of a sixth connecting arrangement.

In the various connecting arrangements to be described, the same reference numerals have been used to designate corresponding parts.

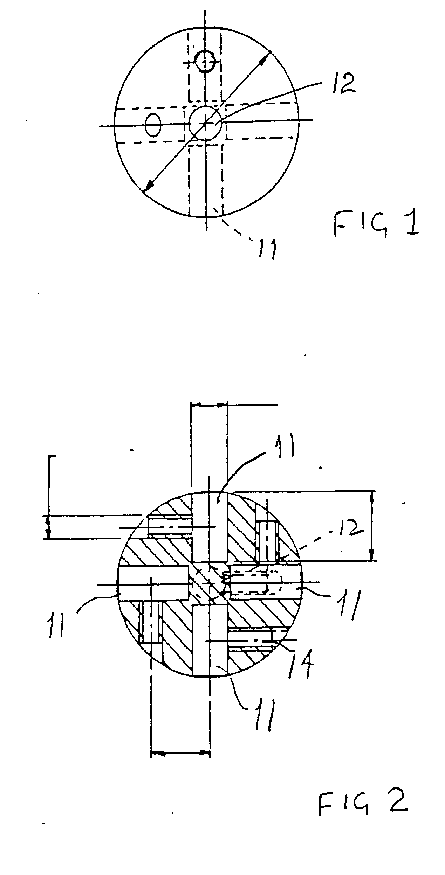

Referring now to Figures 1 to 4 of the drawings, connecting rod 1 has connecting studs 2 projecting axially from each end. The studs 2 are formed as parts of plugs 21 which plug into the ends of a tube 22 to form the connecting rod 1. Each of these studs 2 comprises a head portion 3 at its free end, an adjacent neck portion 4 which leads into the head portion 3 through sloping shoulder 5 and a body portion 6 which connects with the neck portion 3 through sloping shoulder 7.

The connecting member 10 is a complete sphere and has four blind bores 11 which extend from the surface towards the centre of the sphere on the equator, so to speak, of the sphere, the axes of the bores 11 being at right-angles to each other and two further bores 12 which extend from the North and South Poles. The bores 12 could be replaced by a single through bore. The connecting member 10 also has a plurality of threaded bores 14 each of which intersects a respective one of the bores 11 and 12 and locates a grub screw 15.

Thus when the stud 2 of a connecting rod is pushed into one of the bores 11 and 12 it can be locked in position by the grub screw located in the intersecting bore 14. The dimensioning is such that the inner end of grub screw 15 engages the shoulder 5, so that the further the grub screw is screwed into the engagement the more it rides down the shoulder 5 and the more the stud 2 is pulled into the bore until it, the rod 1, is solidly locked against the surface of the connecting member 10.

The rods 1 and their studs 2 as well as the connecting members 10 can be made from plastics material or metal as desired.

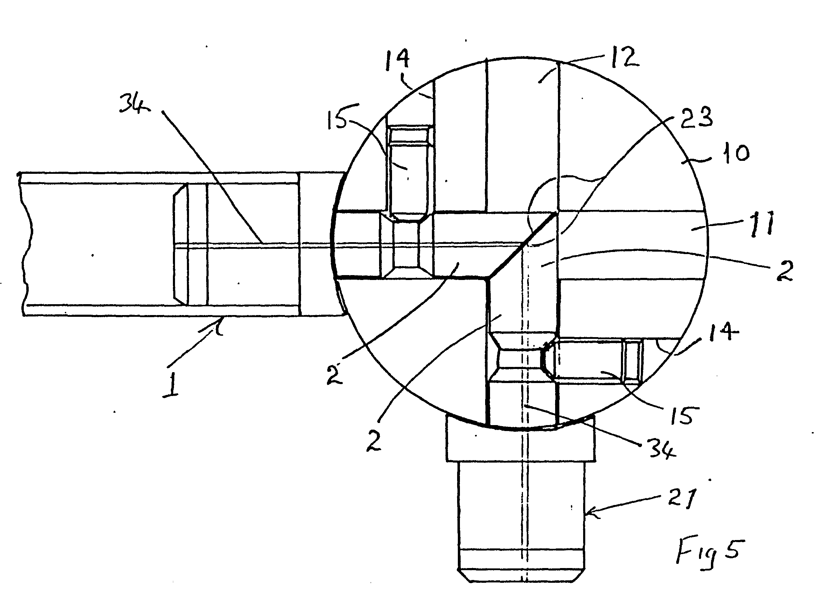

Referring now to Figure 5, a connecting arrangement is shown which is similar in principle to that previously described. However in this arrangement the stud receiving bores 11 and 12 meet each other at the centre of the spherical connecting member 10 so that in effect several diametrical through bores are provided.

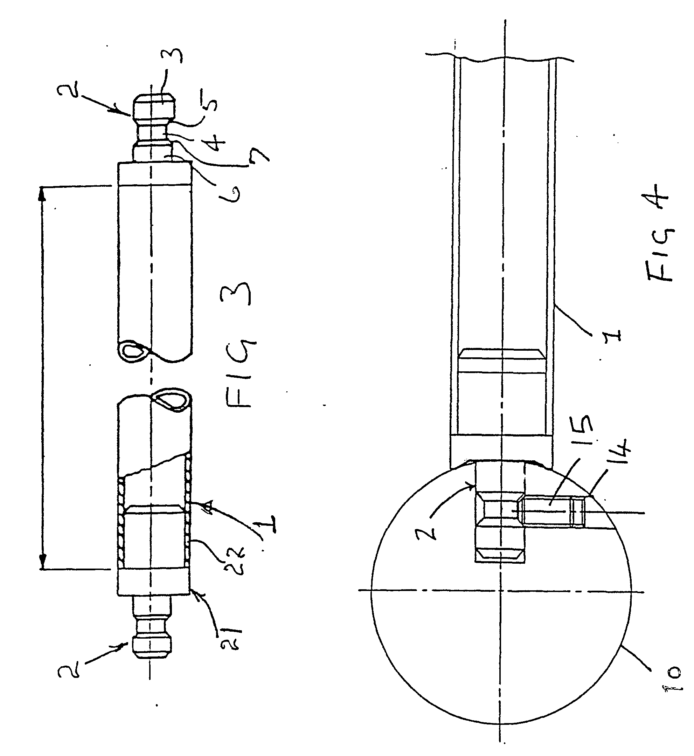

The studs 2 of Figure 5 are longer than the studs 2 of Figure 3 and also the end face 23 of each stud 2 is chamfered so that it is at 45° to the axis of the stud 2. Thus when two rods 1 are fitted into bores 11 and 12 which extend at right-angles to each other the studes 2 abut each other in a mitred joint ensuring a fixed relative disposition of the two rods. Also the rods are prevented from rotating about their own axes by the abutment of their end faces.

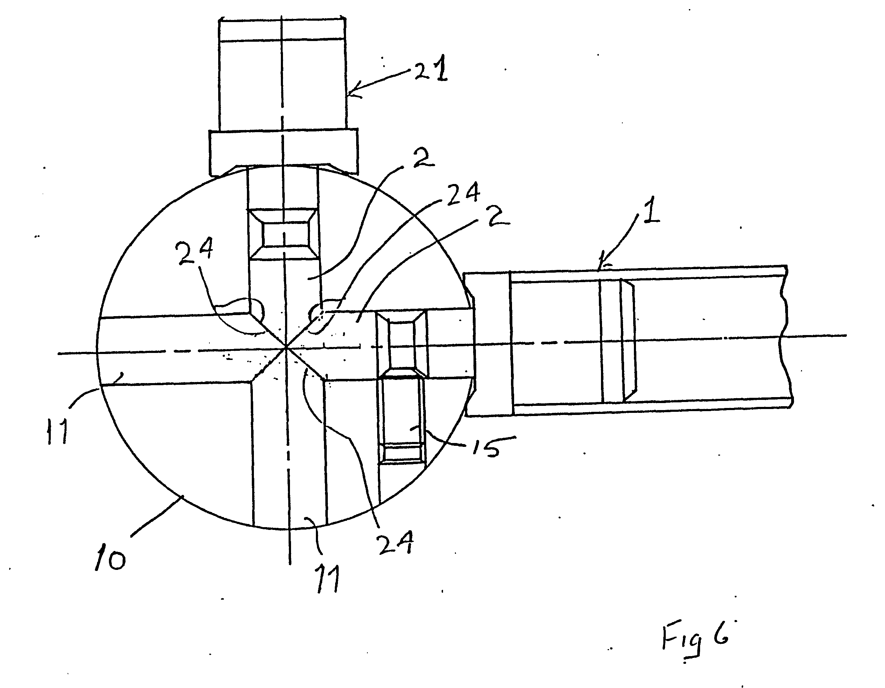

Referring to Figure 6, the connecting member 10 has bores 11 and 12 which meet each other at the centre of the connecting member as in Figure 5 to provide in effect several diametrical through bores. This arrangement differs from the arrangement of Figure 5 in that the ends of the studs 2 are pointed by providing the end of each stud 2 with two chamfered faces 24 which extend at 45° to the axis of the stud. Thus when four rods 1 are fitted into respective bores 11 the ends of the studs interfit to ensure a fixed relative disposition of the four rods 1 and to prevent them rotating about their own axes.

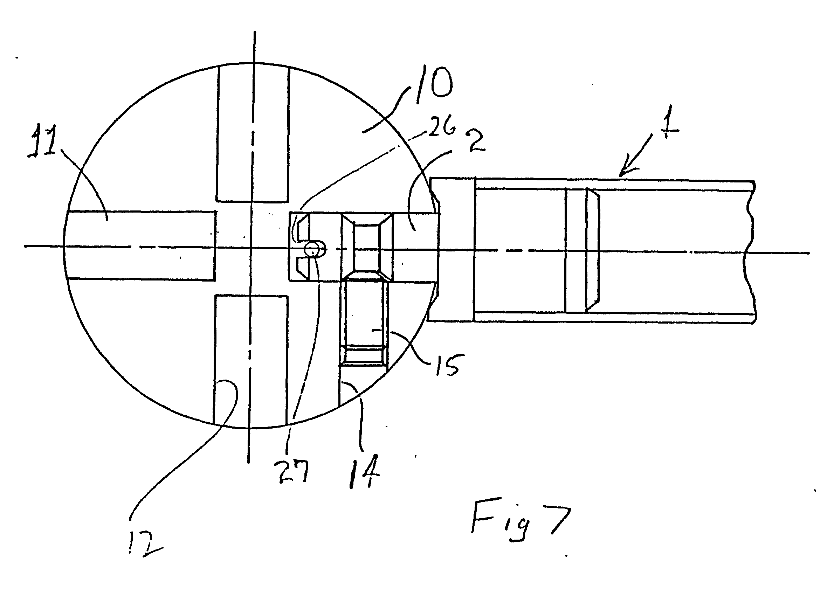

Figure 7 shows a connecting arrangement similar to that shown in Figures 1 to 4 in that it has a connecting member 10 with blind bores 11 and 12 into which the studs 2 at the ends of connecting rods 1 can be fitted. The connecting arrangement differs from that shown in Figures 1 to 4 in that the ends of the studs 2 are provided with transverse grooves 26 and a pin 27 extends across each of the bores 11 and 12. Thus when the stud 2 on a rod 1 is pushed into a bore 11 or 12 in the appropriate orientation the pin 27 engages in the slot 26 so that rotation of the rod 1 about its own axis relative to the connecting member 10 is prevented.

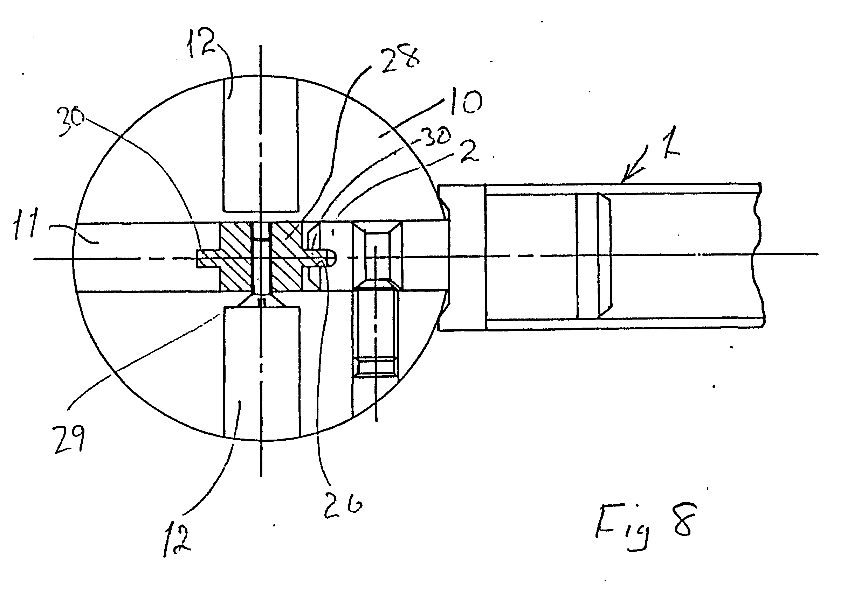

Figure 8 shows a connecting arrangement which is similar in principle to that of Figure 7 in that the ends of the studs 2 are provided with transverse grooves 26. However in the arrangement of Figure 8 the bores 11 are through bores and a block 28 is located at the centre of the connecting member 10 and is fixed in position by a screw 29 whose head is accessible through the bottom of one of the blind bores 12. The block has tongues 30 for locating in the grooves 26 at the ends of the studs 2.

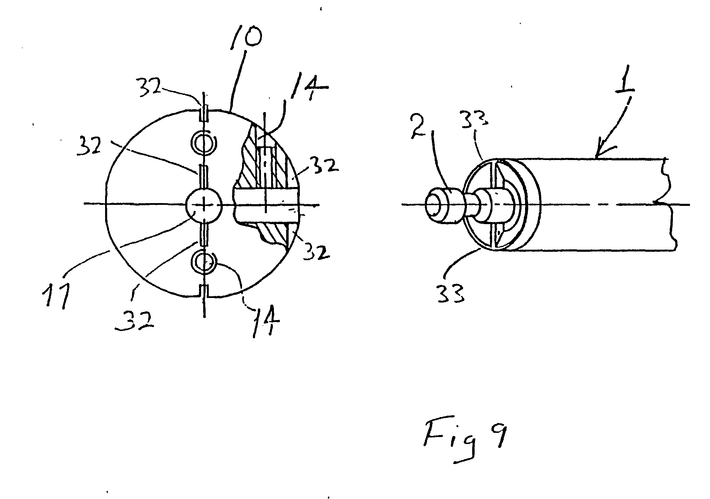

Figure 9 shows a further connecting arrangement in which a rod 1 is prevented from rotating about its own axis relative to a connecting member.

In this arrangement slots 32 extend from both sides of the bores 11 at the surface of the connecting member 10 and webs 33 are provided on the ends of the rods 1 for engagement in the slots 32 when the studs 2 are pushed into the bores 11.

As will be appreciated a whole range of two and three dimensional frames can be built up from a set of the connecting members and rods. Also special fittings can be provided, these fittings having a stud similar to that shown on the rod 1. Such fittings can be designed for various purposes, such as clamps which clamp a table top or a length of shelving at its supporting points, canopy fixings, lamp holders and multitude of other purposes.

The rods and connecting members may provide the basis of a self-assembly furniture system, working surfaces and other attachments being secured in the unused bores of the frame structure. Each spherical connector will have three bores vacant in a simple frame structure.

On a larger scale the system may be used to construct space hardware taking advantage of the fact that by providing the connecting studs with a central through bore 34 as in Figure 5, the frame structure may be used as a conduit for electrical wiring, fibre optics, fluids, gas, vacuum, mechanical drive etc. In this application the vacant bores in the connecting members may be used to attach Solar panels for example or be used to build on additional frame structures.

## Claims

1. A connecting arrangement comprising at least one connecting rod having at one end a connecting stud which is fixed to said end of the rod and has a free end which projects therefrom, the free end having a head portion, an adjacent neck portion and a sloping shoulder between the head and neck portions and a connecting member having an, at least part spherical outer surface, and a plurality of stud receiving bores disposed on said outer surface and extending into said member from said outer surface for receiving the connecting stud at the end of said connecting rod, a plurality of threaded bores in said part spherical connecting member each of which intersects a respective one of the stud receiving bores and a grub screw locating in each of said threaded bores, the arrangement being such that as a said grub screw is screwed into its bore it engages said shoulder on the stud, to draw said stud into the bore in which it is received.

2. A connecting arrangement according to claim 1, wherein the connecting member has at least two stud receiving bores which intersect eac other and the end faces at the free ends of the studs of connecting rods fitted into said two bores abut each other, said end faces extending obliquely to the axes of the studs.

3. A connecting arrangement according to claim 2 and having four intersecting stud receiving bores, the end face of each stud having two surfaces which extend obliquely to the axis of the stud so that said end face can abut corresponding oblique surfaces of the studs of two connecting rods fitted into another two of said bores.

4. A connecting arrangement according to claim 1, wherein the end face at the free end of the stud of each of said connecting rods is arranged to co-operate with a device fitted into the bore received by said stud, whereby the connecting rod is prevented from rotating about its own axis relatively to the connecting member.

5. A connecting arrangement according to claim 4, wherein the said end face is provided with a slot for locating with a pin or tongue located in the bore.

6. A connecting arrangement according to claim 1, wherein the end of the connecting rod is provided with webs which fit into slots extending transversely from said bores on the surface of the connecting member, whereby the connecting rod is prevented from rotating about its own axis relatively to the connecting member.

## Patentansprüche

1. Verbindungseinrichtung, die an einem Ende einen Verbindungszapfen aufweist, der mit dem genannten Ende der Stange befestigt ist und ein freies Ende aufweist, das hervorragt, das einen Kopfteil, einen benachbarten Halsteil sowie eine geneigte Schulter zwischen Kopf- und Halsteil aufweist, ferner mit einem Verbindungselement, das eine zumindest kugelige Außenfläche aufweist, sowie eine Mehrzahl von zapfenaufnehmenden Bohrungen, die auf der Außenfläche vorgesehen sind und sich in das Element von der Außenfläche hineinerstrecken, um den Verbindungszapfen am Ende der Verbindungsstange aufzunehmen, mit einer Mehrzahl von in dem teilweise kugeligen Verbindungselement vorgesehenen Gewindebohrungen, deren jede eine entsprechende der zapfenaufnehmenden Bohrungen schneidet sowie mit einem Gewindestift in jeder der Gewindebohrungen, die Schulter des Zapfens erfaßt, um den Zapfen in die Bohrung einzuziehen, in welcher er sich befindet.

2. Verbindungseinrichtung nach Anspruch 1, dadurch gekennzeichnet, daß das Verbindungselement wenigstens zwei zapfenaufnehmende Bohrungen aufweist, die sich miteinander schneiden, daß die Stirnflächen an den freien Enden der Zapfen der Verbindungsstangen, die in die beiden Bohrungen eingepaßt sind, aneinander anliegen, und daß die Stirnflächen geneigt zu den Achsen der Zapfen verlaufen.

3. Verbindungselement nach Anspruch 2, dadurch gekennzeichnet, daß vier sich schneidende, zapfenaufnehmende Bohrungen vorgesehen sind, und daß die Stirnfläche eines jeden Zapfens zwei Flächen aufweist, die gegen die Achse des Zapfens geneigt sind, so daß die Stirnfläche an entsprechenden geneigten Flächen der Zapfen der beiden Verbindungsstangen anzuliegen vermag, die in eine andere der beiden Bohrungen eingepaßt sind.

4. Verbindungseinrichtung nach Anspruch 3, dadurch gekennzeichnet, daß die Stirnfläche am freien Ende des Zapfens einer jeden Verbindungsstange derart angeordnet ist, daß sie mit einer Vorrichtung zusammenarbeitet, die in die Bohrung eingepaßt ist, die den Zapfen aufnimmt, und daß die Verbindungsstange gegen Verdrehen um ihre eigene Achse relativ zum Verbindungselement gesichert ist.

5. Verbindungseinrichtung nach Anspruch 4, dadurch gekennzeichnet, daß die Stirnfläche mit einem Schlitz zur Aufnahme eines in der Bohrung angeordneten Stiftes oder einer Zunge versehen ist.

6. Verbindungseinrichtung nach Anspruch 1, dadurch gekennzeichnet, daß das Ende der Verbindungsstange mit Rippen ausgerüstet ist, die in Schlitze hineinpassen, welche sich quer zu den Bohrungen auf der Fläche des Verbindungselementes erstrecken, und daß die Verbindungsstange gegen Verdrehen um ihre eigene Achse relativ zum Verbindungselement gesichert ist.

**Revendications**

1. Dispositif d'assemblage comportant au moins une barre de liaison ayant à un bout un goujon d'assemblage qui est fixé à ce bout de la barre et qui a une extrémité libre proéminente par rapport à ce bout, ladite extrémité libre comportant une zone de tête, une zone rétrécie et un épaulement incliné entre la zone de tête et la zone rétrécie, et un élément d'assemblage ayant une surface extérieure au moins partiellement sphérique et une série de trous pour goujons disposés dans ladite surface extérieure et s'étendant dans l'élément à partir de cette surface pour loger le goujon d'assemblage placé au bout de ladite barre de liaison, une série d'alésages filetés ménagés dans ledit élément d'assemblage partiellement sphérique et dont chacun coupe respectivement l'un des trous pour goujons, et une vis sans tête placée dans chacun desdits alésages filetés, le dispositif étant agencé de façon que, quand l'une des vis sans tête est vissée dans son alésage, elle est en prise sur ledit épaulement du goujon pour tirer le goujon dans le trou où il est logé.

2. Dispositif d'assemblage selon la revendication 1, dans lequel l'élément d'assemblage comporte au moins deux trous pour goujons se coupant mutuellement, et les faces terminales des extrémités libres des goujons qui sont logés dans ces deux trous butent l'un contre l'autre, lesdites faces terminales s'étendant obliquement par rapport aux axes des goujons.

3. Dispositif d'assemblage selon la revendication 2 et comportant quatre trous pour goujons se coupant, la face terminale de chaque goujon ayant deux surfaces qui s'étendent obliquement par rapport à l'axe du goujon de façon que ladite face terminale puisse buter contre des surfaces obliques correspondantes des goujons de deux barres de liaison, logés dans deux autres de ces trous.

4. Dispositif d'assemblage selon la revendication 1, dans lequel la face terminale à l'extrémité libre du goujon de chacune desdites barres de liaison est agencée pour coopérer avec un dispositif ajusté dans le trou recevant le goujon, de sorte que la barre de liaison est empêchée de tourner autour de son propre axe par rapport à l'élément d'assemblage.

5. Dispositif d'assemblage selon la revendication 4, dans lequel ladite face terminale est pourvue d'une encoche pour se positionner sur une goupille ou une languette placée dans le trou.

6. Dispositif d'assemblage selon la revendication 1, dans lequel le bout de la barre de liaison est pourvu de nervures qui sont engagées dans des encoches s'étendant transversalement par rapport auxdits trous sur la surface de l'élément d'assemblage, de sorte que la barre de liaison est empêchée de tourner autour de son propre axe par rapport à l'élément d'assemblage.

FIG 1

FIG 2

FIG 3

FIG 4

EP 0 210 305 B1

Fig 5

21

34

15

14

2

2

2

11

10

23

12

14

15

34

T

3

Fig 6

EP 0 210 305 B1

Fig 7

Fig 8

Fig 9